# EUROPEAN PATENT APPLICATION

(11) **EP 4 047 720 A1**
(43) Date of publication of application: **24.08.2022**
(21) Application number: 21785194.8
(22) Date of filing: 09.04.2021
(51) Int. Cl.: H01M 10/6551, H01M 10/6556, H01M 10/653, H01M 10/613, H01M 50/20

(54) **BATTERY MODULE AND BATTERY PACK INCLUDING SAME**

(30) Priority: 09.04.2020 KR 20200043242; 08.04.2021 KR 20210046019
(71) Applicant: LG Energy Solution, Ltd., Seoul 07335 (KR)
(72) Inventor: JANG, Sunghwan, Daejeon 34122 (KR); SEONG, Junyeob, Daejeon 34122 (KR); PARK, Myungki, Daejeon 34122 (KR); CHOI, Jonghwa, Daejeon 34122 (KR)
(74) Representative: Plasseraud IP
(86) International application number: PCT/KR2021/004524
(87) International publication number: WO 2021/206514

(57) **Abstract**

A battery module according to an embodiment of the present invention includes: a battery cell stacked member in which a plurality of battery cells are stacked; a module frame housing the battery cell stacked member; and a heat sink positioned under a bottom part of the module frame, wherein the bottom part of the module frame constitutes the upper plate of the heat sink, and the supply pipe of the heat sink and the bottom part form the flow path of the refrigerant.

## Description

### BACKGROUND OF THE INVENTION

### (a) Field of the Invention

### [Technical Field]

### CROSS-REFERENCE TO RELATED APPLICATION

This application claims priority to and the benefit of Korean Patent Application No. 10-2020-0043242 filed in the Korean Intellectual Property Office on April 09, 2020, and Korean Patent Application No. 10-2021-0046019 filed in the Korean Intellectual Property Office on April 08, 2021, the entire contents of which are incorporated herein by reference.

The present invention relates to a battery module and a battery pack including the same, and more specifically, to a battery module with improved cooling performance and a battery pack including the same.

### [Background Art]

In modern society, in accordance with the daily use of portable devices such as a mobile phone, a laptop computer, a camcorder, a digital camera, and the like, technologies of a field related to the portable devices have been actively developed. In addition, as the rechargeable battery capable of being charged and discharged is used as a power source of an electric vehicle (EV), a hybrid electric vehicle (HEV), a plug-in hybrid electric vehicle (P-HEV) as a method for solving an air pollution of a conventional gasoline vehicles using a fossil fuel, a necessity for the development of the rechargeable battery is increasing.

Currently commercially available rechargeable batteries include a nickel cadmium battery, a nickel hydrogen battery, a nickel zinc battery, and a lithium rechargeable battery. Among them, the lithium rechargeable battery is spotlighted for its merits such as a free charge and discharge, a very low self-discharge rate, and a high energy density because the memory effect hardly does not occur compared to the nickel-based rechargeable battery.

These lithium rechargeable batteries mainly use a lithium-based oxide and a carbon material as a positive active material and a negative active material, respectively. The lithium rechargeable battery has an electrode assembly in which a positive electrode plate and a negative electrode plate respectively coated with these positive active material and negative active material are disposed via a separator interposed therebetween, and a battery case that seals and houses the electrode assembly together with an electrolyte solution.

In general, the lithium rechargeable battery may be classified into a can-type rechargeable battery in which the electrode assembly is built in a metal can and a pouch-type rechargeable battery in which the electrode assembly is built in a pouch of an aluminum laminate sheet according to the shape of the exterior material.

In the case of the rechargeable battery used in small devices, 2 to 3 battery cells are disposed, but in the case of the rechargeable battery used in a medium or large device such as a car, a battery module in which a plurality of battery cells are electrically connected to each other is used. In this battery module, a plurality of battery cells are serially or parallel coupled to each other to form a battery cell stacked member, so that capacity and output are improved. In addition, at least one battery module may be mounted together with various control and protection systems such as a battery management system (BMS) and a cooling system to form a battery pack.

The rechargeable battery, when higher than an appropriate temperature, the performance of the rechargeable battery may be deteriorated, and in severe cases, there is a risk of explosion or ignition. In particular, in the battery module or the battery pack having a plurality of rechargeable batteries, that is, the battery cell, heat emitted from a plurality of battery cells is added up in a narrow space, so that the temperature may rise faster and more severely. In other words, in the case of the battery module in which a plurality of battery cells is stacked and the battery pack in which such the battery module is mounted, high output may be obtained, but it is not easy to remove heat generated in the battery cells during charging and discharging. If the heat dissipation of the battery cell is not performed properly, the deterioration of the battery cell is accelerated, the cycle-life is shortened, and the possibility of the explosion or ignition increases.

Moreover, in the case of the battery module included in the vehicle battery pack, it is frequently exposed to direct sunlight and may be subjected to high temperature conditions such as summer or desert areas.

Therefore, when configuring the battery module or the battery pack, it is very important to secure stable and effective cooling performance.

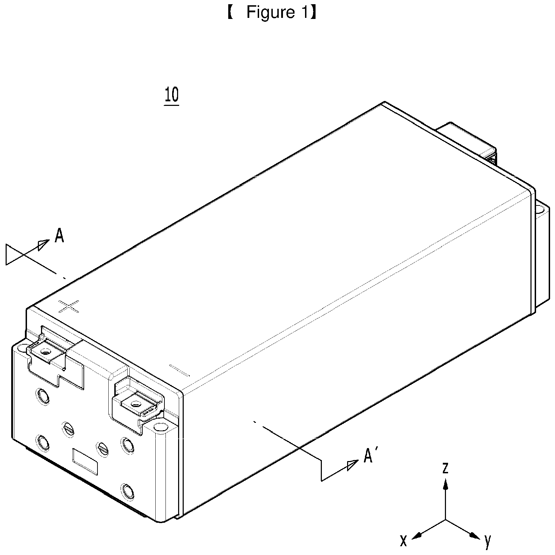

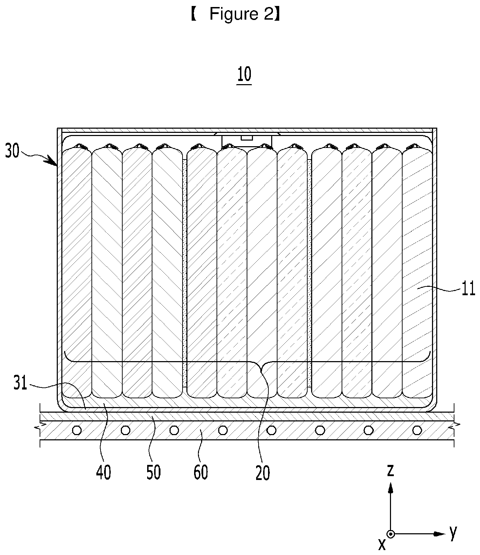

FIG. 1 is a perspective view for a conventional battery module, and FIG. 2 is a cross-sectional view taken along a line A-A' of FIG. 1. Particularly, FIG. 2 further shows a heat transfer member and a heat sink positioned below the battery module.

Referring to FIG. 1 and FIG. 2, in a conventional battery module 10, a plurality of battery cells 11 are stacked to form a battery cell stacked member 20, and the battery cell stacked member 20 is accommodated into a module frame 30.

As described above, since the battery module 10 includes a plurality of battery cells 11, a large amount of heat is generated during charging and discharging. As a cooling means, the battery module 10 may include a thermal conductive resin layer 40 positioned between the battery cell stacked member 20 and the bottom part 31 of the module frame 30. In addition, when the battery module 10 is mounted in the pack frame to form the battery pack, the heat transfer member 50 and the heat sink 60 may be sequentially positioned under the battery module 10. The heat transfer member 50 may be a heat dissipation pad, and the heat sink 60 may have a refrigerant flow path formed therein.

The heat generated from the battery cell 11 is sequentially transferred to the outside of the battery module 10 through the thermal conductive resin layer 40, the bottom part 31 of the module frame 30, the heat transfer member 50, and the heat sink 60.

However, in the case of the conventional battery module 10, since the heat transfer path is complicated as described above, it is difficult to effectively transfer the heat generated from the battery cell 11. The module frame 30 itself may deteriorate the heat conduction characteristic, and a fine air layer such as an air gap that may be formed respectively between the module frame 30, the heat transfer member 50, and the heat sink 60 may also be a contributing factor deteriorating the heat conduction characteristic.

As other demands such as downsizing and a capacity increase continue for the battery modules, it is substantially necessary to develop the battery module that may satisfy these various requirements while improving the cooling performance.

### [Disclosure]

### [Technical Problem]

Embodiments of the present invention are proposed to solve the above problems of the previously proposed methods, and to provide a battery module with improved cooling performance and a battery pack including the same.

Objects to be solved by the embodiments of the present invention are not limited to the above-mentioned objects, and can be variously extended within the scope of the technical idea included in the present invention.

### [Technical Solution]

A battery module according to an embodiment of the present invention includes a battery cell stacked member in which a plurality of battery cells are stacked; a module frame housing the battery cell stacked member; and a heat sink positioned under a bottom part of the module frame, wherein the bottom part of the module frame constitutes the upper plate of the heat sink, and the supply pipe of the heat sink and the bottom part form the flow path of the refrigerant.

The bottom part may be in direct contact with the refrigerant.

The supply pipe may be a U-shaped pipe, and the bottom part may be positioned on the opened upper side of the U-shaped pipe.

The supply pipe may be bent at least once and run from one side to the other.

The supply pipe may include an inlet for inflow of the refrigerant and an outlet for discharge of the refrigerant.

At least one of the inlet and the outlet may include a sealing member surrounding the exterior circumference thereof.

The heat sink may include a lower mounting part extending along a direction parallel to the bottom part, and the lower mounting part may include a through-hole.

The bottom part may include an upper mounting part extending along the lower mounting part; and the upper mounting part may include a through-hole.

The through-hole of the lower mounting part and the through-hole of the upper mounting part may be positioned to correspond to each other.

The battery module may include a thermal conductive resin layer positioned between the bottom part of the module frame and the battery cell stacked member.

The heat sink may further include a lower plate joined to the bottom part.

A clad layer may be positioned between the bottom part and the lower plate.

A battery pack according to an embodiment of the present invention includes the battery module; a pack frame accommodating the battery module; and a pack refrigerant supply pipe positioned between the pack frame and the heat sink and supplying the refrigerant to the supply pipe.

The supply pipe may include an inlet for inflowing the refrigerant and an outlet for discharging the refrigerant, and an opening formed in the pack refrigerant supply pipe may be connected to the inlet.

At least one of the inlet and the outlet may include a sealing member surrounding the exterior circumference thereof, and the sealing member surrounding the inlet may be positioned between the supply pipe and the pack refrigerant supply pipe.

The heat sink may include a lower mounting part extending along a direction parallel to the bottom part, the bottom part may include an upper mounting part extending along the lower mounting part, a through-hole may be formed in each of the lower mounting part and the upper mounting part, and the pack frame may include a fastening hole corresponding to the through-holes.

The battery pack may further include a mounting bolt coupled to the fastening hole through the through-holes.

### [Advantageous Effects]

According to embodiments of the present invention, it is possible to provide a battery module with improved cooling performance through the integrated structure of the module frame and the heat sink.

In addition, it is possible to reduce the cost and to increase the spatial utility by removing the unnecessary cooling structure, thereby increasing the capacity or the output of the battery module.

### [Description of the Drawings]

FIG. 1 is a perspective view for a conventional battery module.
FIG. 2 is a cross-sectional view taken along a line A-A' of FIG. 1.
FIG. 3 is a perspective view of a battery module according to an embodiment of the present invention.
FIG. 4 is an exploded perspective view of a battery module of FIG. 3.
FIG. 5 is a top plan view of a battery module of 3 from below.
FIG. 6 is a cross-sectional view showing a part of a cross-section taken along a line B-B' of FIG. 5.
FIG. 7 is a perspective view showing a heat sink included in a battery module of FIG. 4.
FIG. 8 is a cross-sectional view showing a cross-section taken along a line D-D' of FIG. 7.
FIG. 9 is a cross-sectional view showing a cross-section taken along a line C-C' of FIG. 5.
FIG. 10 is a cross-sectional view showing a shape that a battery module according to an embodiment of the present invention is mounted to a pack frame.
FIG. 11 is a perspective view showing a U-shaped frame and a heat sink according to a variation embodiment of the present invention.
FIG. 12 is a cross-sectional view showing a shape that a battery module to which a U-shaped frame and a heat sink of FIG. 11 are applied is mounted to a pack frame.

### [Mode for Invention]

The present invention will be described more fully hereinafter with reference to the accompanying drawings, in which embodiments of the invention are shown. As those skilled in the art would realize, the described embodiments may be modified in various different ways, all without departing from the spirit or scope of the present invention.

Descriptions of parts not related to the present invention are omitted, and like reference numerals designate like elements throughout the specification.

Further, since sizes and thicknesses of constituent members shown in the accompanying drawings are arbitrarily given for better understanding and ease of description, the present invention is not limited to the illustrated sizes and thicknesses. In the drawings, the thickness of layers, films, panels, regions, etc., are exaggerated for clarity. In the drawings, for better understanding and ease of description, the thicknesses of some layers and areas are exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. In addition, the word "∼ on" means positioning on or below the object portion, but does not essentially mean positioning on the upper side of the object portion based on a gravity direction.

In addition, unless explicitly described to the contrary, the word "comprise", and variations such as "comprises" or "comprising", will be understood to imply the inclusion of stated elements but not the exclusion of any other elements.

Further, in the specification, the phrase "on a plan view" means when an object portion is viewed from above, and the phrase "on across-section" means when a cross-section taken by vertically cutting an object portion is viewed from the side.

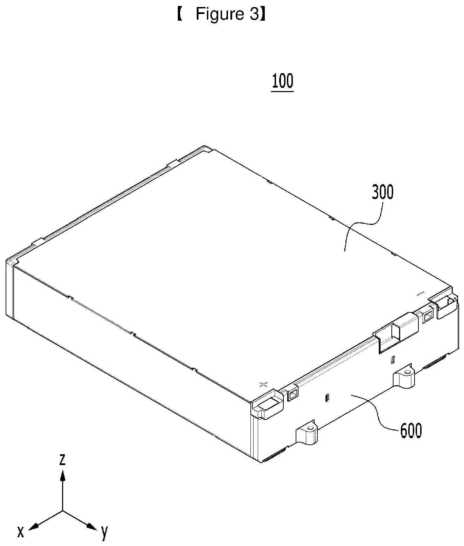

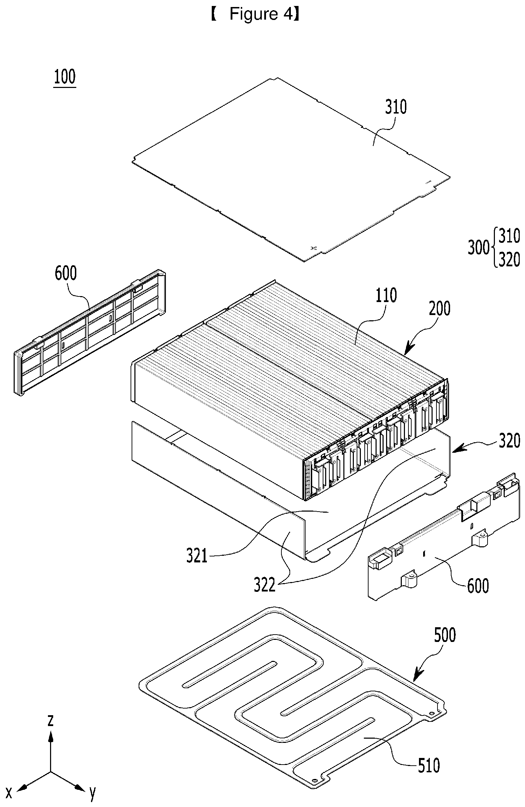

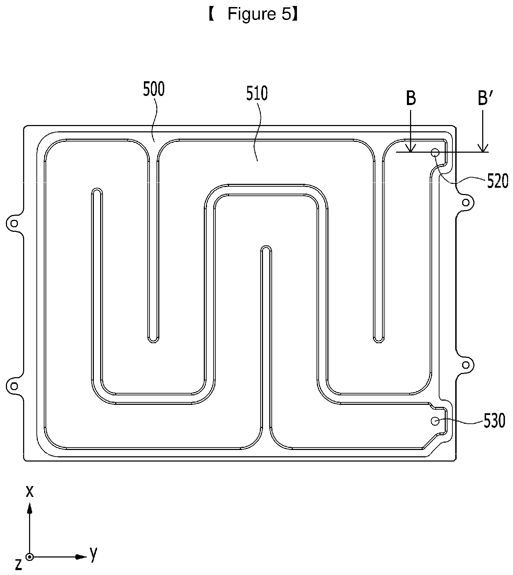

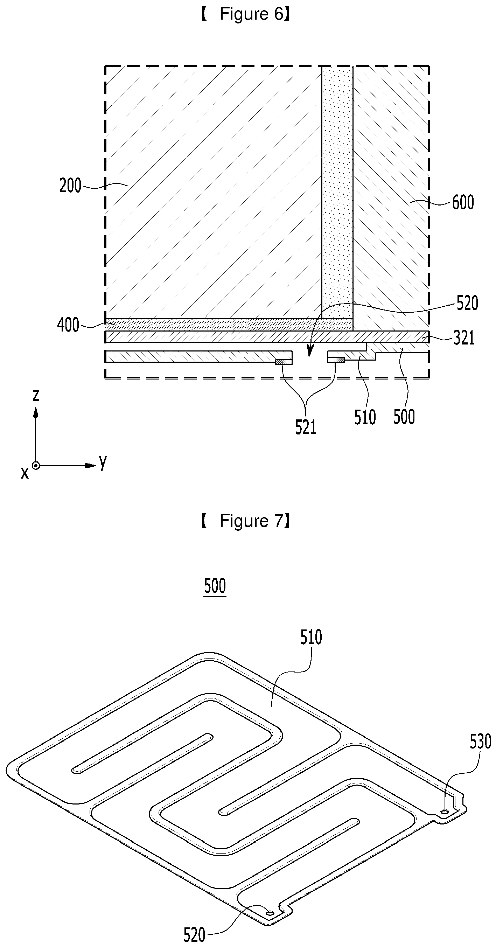

FIG. 3 is a perspective view of a battery module according to an embodiment of the present invention. FIG. 4 is an exploded perspective view of a battery module of FIG. 3. FIG. 5 is a top plan view of a battery module of 3 from below. FIG. 6 is a cross-sectional view showing a part of a cross-section taken along a line B-B' of FIG. 5.

Referring to FIG. 3 to FIG. 6, a battery module 100 according to an embodiment of the present invention includes a battery cell stacked member 200 in which a plurality of battery cells 110 is stacked, a module frame 300 accommodating the battery cell stacked member 200, and a heat sink 500 positioned under the bottom part 321 of the module frame 300. The bottom part 321 of the module frame 300 constitutes the upper plate of the heat sink 500, and the supply pipe 510 of the heat sink 500 and the bottom part 321 of the module frame 300 form a flow path of a refrigerant. The specific structure of the heat sink 500 is described later in detail with reference to FIG. 7 to FIG. 9.

First, the battery cell 110 is preferably a pouch-type battery cell. The battery cell 110 may be manufactured by accommodating the electrode assembly in a pouch case of a laminate sheet including a resin layer and a metal layer, and then heat-sealing a sealing part of the pouch case. The battery cell 110 may be formed in a rectangular sheet-shaped structure.

The battery cells 110 may be configured in a plurality, and a plurality of battery cells 110 are stacked to be electrically connected to each other to form a battery cell stacked member 200. Particularly, as shown in FIG. 4, a plurality of battery cells 110 may be stacked in a direction parallel to the x-axis.

The module frame 300 housing the battery cell stacked member 200 may include an upper cover 310 and a U-shaped frame 320.

The U-shaped frame 320 may include a bottom part 321 and two side parts 322 extending upward from both ends of the bottom part 321. The bottom part 321 may cover a lower surface (a -z-axis direction) of the battery cell stacked member 200, and the side parts 322 may cover both sides (an x-axis direction and a -x-axis direction) of the battery cell stacked member 200.

The upper cover 310 may be formed in a single plate-shaped structure surrounding the upper surface (a z-axis direction) except for the lower surface and the both sides covered by the U-shaped frame 320. The upper cover 310 and the U-shaped frame 320 may form a structure that covers the battery cell stacked member 200 up, down, left and right by being joined by welding or the like in a state in which the corresponding corner portions are in contact with each other. The battery cell stacked member 200 may be physically protected through the upper cover 310 and the U-shaped frame 320. To this end, the upper cover 310 and the U-shaped frame 320 may include a metal material having predetermined strength.

On the other hand, although not specifically shown, the module frame 300 according to a variation may be a mono frame in a form of a metal plate in which the upper surface, the lower surface, and both sides are integrated. That is, it is not a structure in which the U-shaped frame 320 and the upper cover 310 are coupled to each other, but it is manufactured by extrusion molding and may have a structure in which the upper surface, the lower surface, and both sides are integrated.

The end plate 600 may be positioned on an opened first side (a y-axis direction) and a second side (a -y-axis direction) of the module frame 300 to cover the battery cell stacked member 200. This end plate 600 may physically protect the battery cell stacked member 200 and other electrical equipment from external impact.

Meanwhile, although not specifically illustrated, a bus bar frame on which a bus bar is mounted and an insulating cover for an electrical insulation may be positioned between the battery cell stacked member 200 and the end plate.

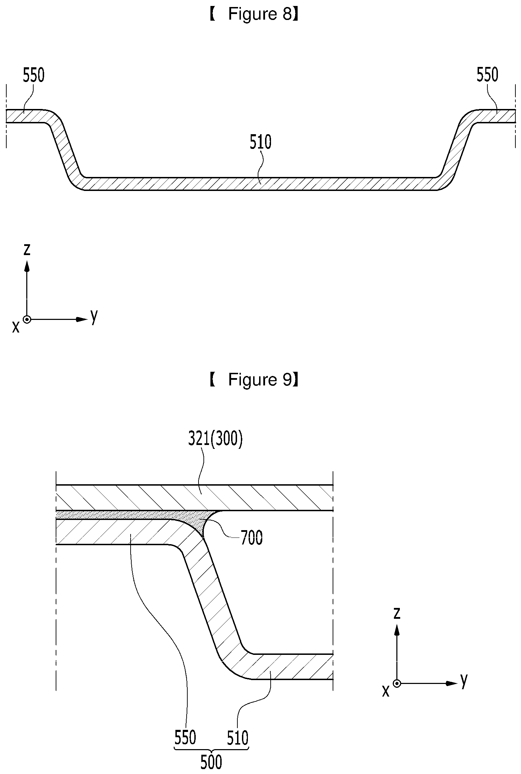

FIG. 7 is a perspective view showing a heat sink included in a battery module of FIG. 4. FIG. 8 is a cross-sectional view showing a cross-section taken along a line D-D' of FIG. 7.

Referring to FIG. 4 to FIG. 8, as described above, the bottom part 321 of the module frame 300 configures the upper plate of the heat sink 500, and the supply pipe 510 of the heat sink 500 and the bottom part 321 of the module frame 300 form the flow path of the refrigerant.

Specifically, the heat sink 500 may include a supply pipe 510 forming the flow path of the refrigerant and a lower plate 550 coupled to to the bottom part 321 of the module frame 300. The supply pipe 510 of the heat sink 500 may be a U-shaped pipe, and the bottom part 321 may be positioned on the open upper side of the U-shaped pipe. More specifically, as shown in FIG. 7 or FIG. 8, the supply pipe 510 is a U-shaped pipe with a cross-section cut in the yz plane or the xz plane, and the upper part may be opened. As the lower plate 550 of the heat sink 500 is joined with the bottom part 321 of the module frame 300, the space between the supply pipe 510 and the bottom part 321 becomes the region where the refrigerant flows, that is, the flow path of the refrigerant. Therefore, the bottom part 321 may be in direct contact with the refrigerant.

There is no particular limitation on the manufacturing method of the supply pipe 510 of the heat sink 500, but for example, a part of the lower plate 550 may be depressed in the lower direction to form the U-shaped supply pipe 510 of which the upper side is opened.

On the other hand, as shown in FIG. 6, a thermal conductive resin layer 400 including a thermal conductive resin may be positioned between the bottom part 321 of the module frame 300 and the battery cell stacked member 200. The thermal conductive resin layer 400 may be formed by coating a thermal conductive resin to the bottom part 321 and curing the coated thermal conductive resin.

The thermal conductive resin may include a thermally conductive adhesive material, and specifically, may include at least one of a silicone material, a urethane material, and an acryl (Acrylic) material. The thermal conductive resin may be liquid at the time of the coating, but may serve to fix at least one battery cell 110 constituting the battery cell stacked member 200 by being cured after the coating. In addition, the heat conduction characteristic is excellent, so that the heat generated in the battery cell 110 may be quickly transferred to the lower side of the battery module.

In the conventional battery module 10 shown in FIG. 2, the heat generated by the battery cell 11 sequentially passes through the thermal conductive resin layer 40, the bottom part 31 of the module frame 30, the heat transfer member 50 and the refrigerant of the heat sink 60 to be transmitted to the outside of the battery module 10. Also, the flow path of the refrigerant of the heat sink 60 is positioned inside the heat sink 60.

On the other hand, the battery module 100 according to the present embodiment implements a cooling integrated structure of the module frame 300 and the heat sink 500 to further improve the cooling performance. Specifically, the heat generated from the battery cell 110 may be transferred to the outside of the battery module 100 through the thermal conductive resin layer 400, the bottom part 321 of the module frame 300, and the refrigerant. By removing the conventional unnecessary cooling structure, the heat transfer path is simplified and each air gap between the layers may be reduced, so the cooling efficiency or performance may be increased. Particularly, the bottom part 321 is composed of the upper plate of the heat sink 500, and since the bottom part 321 is in direct contact with the refrigerant, there is a merit that it allows more direct cooling through the refrigerant. Conventionally, as shown in FIG. 2, the upper configuration of the heat transfer member 50 and the heat sink 60 is positioned between the bottom part 31 and the refrigerant, which may be compared with the decreasing in the cooling efficiency.

In addition, by removing the unnecessary cooling structure, the height of the battery module 100 is reduced, making it possible to reduce costs and to increase spatial utility. Furthermore, since the battery module 100 may be compactly disposed, the capacity or output of the battery pack including a plurality of battery modules 100 may be increased.

Meanwhile, as it is described later, the bottom part 321 may be joined to the lower plate 550 of the heat sink 500 by a welding method. The present embodiment, through the integrated cooling structure of the bottom part 321 of the module frame 300 and the heat sink 500, not only may the cooling performance be improved as described above, but it may also support the load of the battery cell stacked member 200 accommodated in the module frame 300, and may have an effect of reinforcing the rigidity of the battery module 100.

For effective cooling, as shown in FIG. 5, it is desirable that the supply pipe 510 be formed over the entire area of the bottom part 321 of the module frame 300. To this end, the supply pipe 510 may be bent at least once and lead from one side to the other. In particular, in order to form the supply pipe 510 over the entire area of the bottom part 321, it is desirable to bend the supply pipe 510 several times.

On the other hand, referring to FIG. 5, the supply pipe 510 according to the present embodiment may include an inlet 520 for inflowing the refrigerant and an outlet 530 for discharging the refrigerant. Specifically, when the supply pipe 510 is connected from one side to the other side, the inlet 520 may be provided at the lower end of one side of the supply pipe 510, and the outlet 530 may be provided at the lower end of the other side of the supply pipe 510. The refrigerant may inflow between the bottom part 321 and the supply pipe 510 through the inlet 520 from the pack refrigerant supply pipe, which will be described later, and the inflowed refrigerant may move along the supply pipe 510, and then be discharged to a pack refrigerant discharge pipe through the outlet 530. As the refrigerant moves from one side of the supply pipe 510 formed over the entire area of the bottom part 321 to the other side, efficient cooling of the entire area of the battery cell stacked member 200 may be achieved.

Also, referring to FIG. 6, at least one of the inlet 520 and the outlet 530 may include a sealing member 521 surrounding the exterior circumference thereof. Through this sealing member 521, it is possible to prevent leakage of the refrigerant during the inflow and discharge of the refrigerant. There is no limitation on the structure of the sealing member 521 according to the present embodiment, but a member of a gasket type or a member of a valve port as shown may be applied, and may have the shape of an O-ring.

On the other hand, the refrigerant is a medium for cooling, there is no particular limitation, but it may be cooling water.

Hereinafter, the connection between the bottom part 321 of the module frame 300 and the lower plate 550 of the heat sink 500 is described in detail with reference to FIG. 9.

FIG. 9 is a cross-sectional view showing a cross-section taken along a line C-C' of FIG. 5. However, in FIG. 9, for convenience of explanation, the configuration above the bottom part 321 is omitted.

Referring to FIG. 9 along with FIG. 4, FIG. 7, and FIG. 8, as described above, the bottom part 321 may be joined to the lower plate 550 of the heat sink 500 by the welding method. Specifically, brazing welding using a clad metal may be used. The brazing welding is a method of joining the metal materials without melting the metal materials by providing a low-melting-point metal between the metal materials in the bonding between the metal materials. By the brazing welding, a clad layer 700 may be formed between the bottom part 321 and the lower plate 550.

For example, the bottom part 321 is not particularly limited, but may include an AL60 series material or an SUS material for the strength of the battery module. The lower plate 550 of the heat sink 500 is not particularly limited, but may include an AL30 series material or an SUS material, and may include a layer of the AL40 series material provided on the surface of the layer of the AL30 series material or the SUS material. The layer of the AL40 series material on the lower plate 550 is for forming the clad layer in the brazing welding. By performing the brazing welding for the bottom part 321 and the lower plate 550, in the final component, as shown in FIG. 9, the clad layer 700 may be positioned between the bottom part 321 and the lower plate 550. For convenience of explanation, the thickness of the clad layer 700 is exaggerated.

As another example, the bottom part 321 may include an AL60 series material or an SUS material for strength of the battery module, and may include a layer of the AL30 series material provided on the surface of the layer of the AL60 series material or the SUS material. The lower plate 550 of the heat sink 500 may include an AL30 series material or a SUS material, and may contain a layer of an AL40 series material provided on the surface of the layer of the AL30 series material or the SUS material. The layer of the AL30-based material on the bottom part 321 and the layer of the AL40-based material on the lower plate 550 are for forming the clad layer in the brazing welding. With the layer of the AL30 series material on the bottom part 321 and the layer of the AL40 series material on the lower plate 550 facing each other, the brazing welding may be performed on the bottom part 321 and the lower plate 550 to form the clad layer 700. That is, in this example, the layers for forming the clad layer are formed on both the bottom part 321 of the module frame 300 and the lower plate 550 of the heat sink 500. Through this, it is possible to prevent micro cracks from occurring during the brazing welding process.

On the other hand, although not specifically shown, according to another embodiment of the present invention, the bottom part 321 and the lower plate 550 may be welded and joined without the above clad layer being formed.

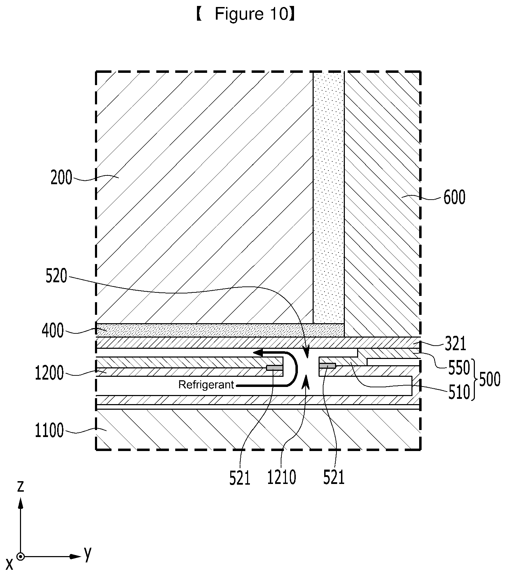

FIG. 10 is a cross-sectional view showing a shape that a battery module according to an embodiment of the present invention is mounted to a pack frame.

Referring to FIG. 3, FIG. 4, and FIG. 10 together, the battery module 100 according to an embodiment of the present invention may be accommodated in the pack frame 1100 to form the battery pack. That is, the battery pack according to the present embodiment includes a battery module 100 including a heat sink 500, a pack frame 1100 accommodating the battery module 100, and a pack refrigerant supply pipe 1200 positioned between the pack frame 1100 and the heat sink 500 for supplying the refrigerant to the supply pipe 510 of the heat sink 500.

As described above, the supply pipe 510 may include an inlet 520 for the inflow of the refrigerant and an outlet 530 for the discharge of the refrigerant, an opening 1210 is formed in the pack refrigerant supply pipe 1200, and the opening 1210 may be connected with the inlet 520. Specifically, the opening 1210 is provided in the position corresponding to the inlet 520 while facing the supply pipe 510, and the opening 1210 and the inlet 520 may be in contact with each other and connected to each other. Although not specifically shown, an opening connected to the outlet 530 may be formed in the pack refrigerant discharge pipe (not shown) as well.

Accordingly, the refrigerant that has moved along the pack refrigerant supply pipe 1200 may inflow into the supply pipe 510 of the heat sink 500 through the inlet 520. The refrigerant traveling along the supply pipe 510 may be returned to a pack refrigerant outlet pipe (not shown) through the outlet 530.

Also, as described above, at least one of the inlet 520 and the outlet 530 may include a sealing member 521 surrounding the exterior circumference thereof. The sealing member 521 surrounding the inlet 520 may be positioned between the supply pipe 510 and the pack refrigerant supply pipe 1200, and the sealing member surrounding the outlet 530 may be positioned between the supply pipe 510 and the pack refrigerant discharge pipe (not shown). Through this sealing member 521, it is possible to prevent the leakage of the refrigerant during the inflow and discharge of the refrigerant.

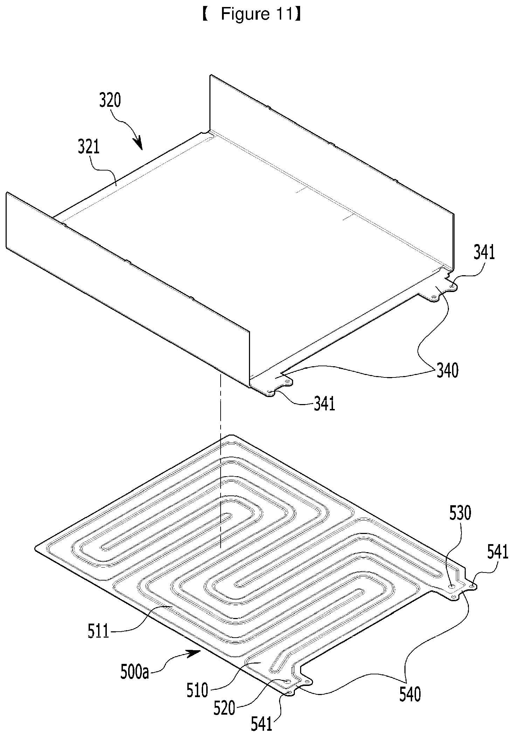

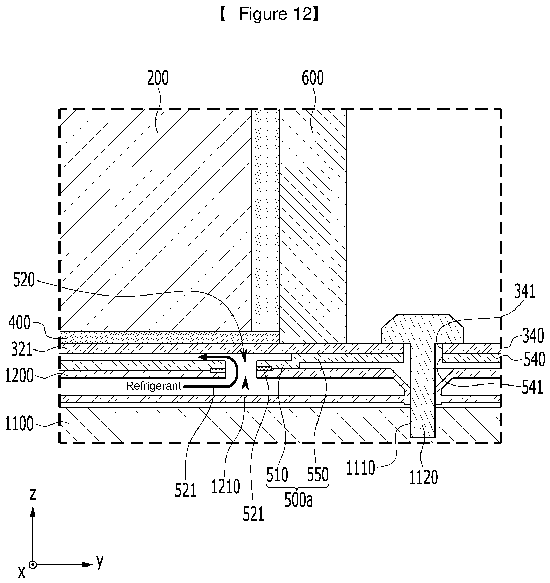

FIG. 11 is a perspective view showing a U-shaped frame and a heat sink according to a variation embodiment of the present invention, and FIG. 12 is a cross-sectional view showing a shape that a battery module to which a U-shaped frame and a heat sink of FIG. 11 are applied is mounted to a pack frame.

Referring to FIG. 11 and FIG. 12, the heat sink 500a according to a modified embodiment of the present invention may include a lower mounting part 540 extending along the direction (the y-axis direction) parallel to the bottom part 321 of the module frame, that is, the U-shaped frame 320 and a through-hole 541 may be formed in the lower mounting part 540. The through-hole 541 of the lower mounting part 540 may be penetrated and formed in the direction (the z-axis direction) perpendicular to the bottom part 321.

Meanwhile, the bottom part 321 may include an upper mounting part 340 extending along the lower mounting part 540, and a through-hole 341 may be formed in the upper mounting part 340. The through-hole 341 of the upper mounting part 340 may be penetrated and formed in the direction (the z-axis direction) perpendicular to the bottom part 321.

The lower mounting part 540 and the upper mounting part 340 may be configured to be overlapped, so that the through-hole 541 of the lower mounting part 540 and the through-hole 341 of the upper mounting part 340 may be positioned to correspond to each other.

The pack frame 1100 may include a fastening hole 1110 corresponding to the through-holes 341 and 541, and the mounting bolt 1120 may be coupled to the fastening hole 1110 through the through-holes 341 and 541. At this point, the pack refrigerant supply pipe 1200 can be designed to avoid and pass over the the mounting bolt 1120 on the pack frame 1100.

The module frame 300 and the heat sink 500a may be fixed to the pack frame 1100 through the lower mounting part 540, the upper mounting part 340, and the mounting bolt 1120. In addition, by the fastening force of the mounting bolt 1120, the bottom part 321, the heat sink 500a, and the pack refrigerant supply pipe 1200 are strongly adhered to each other, so the possibility of leakage of the refrigerant between them may be reduced.

Meanwhile, a cell barrier 511 may be formed in the supply pipe 510. The cell barrier 511 may be protruded upward to form a structure that runs along the supply pipe 510. The width of the supply pipe 510 is widened and the cell barrier 511 is formed in the center thereof, thereby reducing the flow path width of the refrigerant, thereby minimizing the pressure deterioration of the refrigerant and simultaneously reducing the temperature deviation of the refrigerant.

In the present embodiment, terms indicating directions such as before, after, left, right, up, and down have been used, but these terms are only for convenience of explanation, and may vary depending on a position of an object to be targeted or a position of an observer.

One or more battery modules according to the present embodiment described above may be mounted together with various control and protection systems such as a battery management system (BMS) and a cooling system to form the battery pack.

The battery module or the battery pack may be applied to various devices. Specifically, it may be applied to transportation means such as electric bicycles, electric vehicles, hybrids, etc., but is not limited thereto, and may be applied to various devices that may use a rechargeable battery.

While this invention has been described in connection with what is presently considered to be practical embodiments, it is to be understood that the invention is not limited to the disclosed embodiments. On the contrary, it is intended to cover various modifications and equivalent arrangements included within the spirit and scope of the appended claims.

### Description of symbols

100: battery module
110: battery cell
200: battery cell stacked member
300: module frame
310; upper cover
320: U-shaped frame
321: bottom part
400: thermal conductive resin layer
500, 500a: heat sink
510: supply pipe
600: end plate
1100: pack frame
1200: pack refrigerant supply pipe

## Claims

1. A battery module comprising:
a battery cell stacked member in which a plurality of battery cells are stacked;
a module frame housing the battery cell stacked member; and
a heat sink positioned under a bottom part of the module frame,
wherein the bottom part of the module frame constitutes the upper plate of the heat sink, and
the supply pipe of the heat sink and the bottom part form the flow path of the refrigerant.

2. The battery module of claim 1, wherein
the bottom part is in direct contact with the refrigerant.

3. The battery module of claim 1, wherein
the supply pipe is a U-shaped pipe, and the bottom part is positioned on an opened upper side of the U-shaped pipe.

4. The battery module of claim 1, wherein
the supply pipe is bent at least once and runs from one side to the other.

5. The battery module of claim 1, wherein
the supply pipe includes an inlet for the inflow of the refrigerant and an outlet for the discharge of the refrigerant.

6. The battery module of claim 5, wherein
at least one of the inlet and the outlet includes a sealing member surrounding the exterior circumference thereof.

7. The battery module of claim 1, wherein
the heat sink includes a lower mounting part extending along a direction parallel to the bottom part, and
the lower mounting part includes a through-hole.

8. The battery module of claim 7, wherein:
the bottom part includes an upper mounting part extending along the lower mounting part; and
the upper mounting part includes a through-hole.

9. The battery module of claim 8, wherein
the through-hole of the lower mounting part and the through-hole of the upper mounting part are positioned to correspond to each other.

10. The battery module of claim 1, further comprising
a thermal conductive resin layer positioned between the bottom part of the module frame and the battery cell stacked member.

11. The battery module of claim 1, wherein
the heat sink further includes a lower plate joined to the bottom part.

12. The battery module of claim 11, wherein
a clad layer is positioned between the bottom part and the lower plate.

13. A battery pack comprising:
the battery module of claim 1;
a pack frame accommodating the battery module; and
a pack refrigerant supply pipe positioned between the pack frame and the heat sink and supplying the refrigerant to the supply pipe.

14. The battery pack of claim 13, wherein
the supply pipe includes an inlet for inflowing the refrigerant and an outlet for discharging the refrigerant, and
an opening formed in the pack refrigerant supply pipe is connected to the inlet.

15. The battery pack of claim 14, wherein
at least one of the inlet and the outlet includes a sealing member surrounding the exterior circumference thereof, and
the sealing member surrounding the inlet is positioned between the supply pipe and the pack refrigerant supply pipe.

16. The battery pack of claim 13, wherein
the heat sink includes a lower mounting part extending along a direction parallel to the bottom part,
the bottom part includes an upper mounting part extending along the lower mounting part,
a through-hole is formed in each of the lower mounting part and the upper mounting part, and
the pack frame includes a fastening hole corresponding to the through-holes.

17. The battery pack of claim 16, further comprising
a mounting bolt coupled to the fastening hole through the through-holes.
